# EUROPÄISCHE PATENTSCHRIFT

(11) **EP 1 263 518 B1**
(45) Veröffentlichungstag und Bekanntmachung des Hinweises auf die Patenterteilung: **21.04.2004**
(21) Anmeldenummer: 01913792.6
(22) Anmeldetag: 08.02.2001
(51) Int. Cl.: B01D 35/153

(54) **FILTERVORRICHTUNG**
FILTER DEVICE
DISPOSITIF FILTRANT

(30) Priorität: 12.02.2000 DE 10006327
(43) Veröffentlichungstag der Anmeldung: 11.12.2002
(73) Patentinhaber: Hydac Filtertechnik GmbH, 66280 Sulzbach/Saar (DE)
(72) Erfinder: SANN, Norbert, 66292 Riegelsberg (DE); KLEIN, Volkmar, 66482 Zweibrücken (DE); STICHER, Jürgen, 66450 Bexbach (DE)
(74) Vertreter: Patentanwälte Bartels und Partner
(86) Internationale Anmeldenummer: PCT/EP2001/001350
(87) Internationale Veröffentlichungsnummer: WO 2001/058566

(56) Entgegenhaltungen:
- WO-A-95/07745
- WO-A-97/26979
- DE-A- 3 305 024
- DE-A- 19 511 450
- DE-A- 19 717 054
- US-A- 3 802 564
- US-A- 5 397 462

## Beschreibung

Die Erfindung betrifft eine Filtervorrichtung mit den Merkmalen des Oberbegriffs des Patentanspruches 1.

Dahingehende Filtervorrichtungen (DE-A-195 11 450) sind in einer Vielzahl von Ausführungsformen bekannt und auf dem Markt frei ethältlich. Ist das Filteretement nach einer gewissen Einsatzdauer in Abhängigkeit von der durchzuführenden Filtrationsaufgabe verschmutzt, ist es gegen ein neues Filterelement zu tauschen, wobei für einen dahingehenden Filterelementwechsel das Filtergehäuse in der Regel zu entlüften und zu öffnen ist und nach Austausch des Filterelementes wieder geschlossen wird. Dabei verbleibt dann häufig verschmutztes Fluid innerhalb des ansonsten zugesetzten Filterelementes, wobei es beim Entsorgen des Filterelementes durch Verschütten ungewollt zu einem Austritt von verschmutztem Fluid kommen kann, was die Umgebung belastet und entsprechende Reinigungsarbeiten notwendig macht. Des weiteren ist beim Elementwechsel das verschmutzte Filterelement auf seiner Innenseite häufig vollständig mit dem Restfluid befüllt, was zu einer deutlich spürbaren Erhöhung des zu handhabenden Gewichtes für das auszutauschende Filterelement führt und die Arbeit für das Wartungspersonal erschwert.

Bei einer bekannten Filteraggregatlösung nach der DE-A-195 11 450 ist das Schließteil aus einem federbelasteten Plattenventilteil gebildet, das in der Art eines Rückschlagventils, das im normalen Betrieb geschlossen ist, Im Falle eines übermäßigen Druckanstieges im Filtergehäuse öffnet und direkt eine Verbindung zu der Schmutzölansaugleitung schafft, so daß im Falle eines verbrauchten Filterelementes im Sinne einer Bypaßlösung ein "Kurzschluß" entsteht und die Pumpe direkt von der Reinölseite zur Schmutzölseite fördert (Zirkulation). Zwar wird auf diese Weise verhindert, daß Schmutzöl ungefiltert In den Hydraulikvorrat gelangt; in Abhängigkeit der am Rückschlagventil anstehenden Druckverhältnisse sind Fehlfunktionen aber nicht immer vollständig auszuschließen.

Durch die DE-A-197 17 054 ist eine gattungsgemäße Filtervorrichtung bekännt, insbesondere ein Wasserbehälter mit Filterpatrone. Der Wasserbehälter ist mit einer Filterpatrone versehen, die an ihrem Auslaßbereich ein Ventil mit einem Schließteil aufweist. Der Behälter wird in eine Getränkemaschine (Kaffee-Vollautomat od, dgl.) eingesetzt, wobei das Ventil mit seinem Kugelschließteil durch einen nicht gezeigten Dom in der Getränkemaschine durch Druck auf das Schließteil in Form der Schließkugel geöffnet wird. Eine Pumpe der Getränkemaschine kann dann das Wasser im Bedarfsfall über das Ventil zur weiteren Verwendung absaugen und aufgrund der tief angeordneten Wassereintrittsöffnung des äußeren Filtersiebes der Filterpatrone kann der Wasserbehälter durch die genannte Pumpe völlig entleert werden. Die Wasseraufbereitung erfolgt daher bei der bekannten Lösung vorteilhafterweise im Aufstrom, so daß eine Bettverdichtung, wie Kanalbildung, vermieden wird. Durch ein in der Spitze der Patrone angeordnetes Filtersieb kann diese automatisch entlüftet werden. Alternativ kann das mechanisch über den Dorn öffenbare Rückschlagventil ebenso in der Filterpatrone angebracht sein, wobei in beiden Fällen das Schließteil des Ventils in einem Aufnahmekäfig geführt ist. Da der Öffnungsdorn mit entsprechend geringem Aufstoßquerschnitt das Schließteil des Ventils öffnet, sind auch hier Fehlfunktionen nicht auszuschließen. Da mit Abnehmen des Wasserbehälters über die Schließfeder das Schließteil schließt, verbleiben etwaige Fluidanteile im Wasserbehälter und/oder in der Filterpatrone, so daß bei Übertragung der bekannten Lösung auf eine Hydraulikanwendung die eingangs erwähnten Nachteile entstehen, nämlich daß in nachteiliger Weise bei einem Elementwechsel das verschmutzte Filterelement auf seiner Innenseite mit dem verschmutzten Restfluid befüllt bleibt.

Ausgehend von diesem Stand der Technik liegt der Erfindung die Aufgabe zugrunde, eine demgegenüber verbesserte Filtervorrichtung zu schaffen, die insbesondere den notwendigen Filterelementwechsel erleichtert und die Umgebung wenig belastet. Eine dahingehende Aufgabe löst eine Filtervorrichtung mit den Merkmalen des Patentanspruches 1.
Dadurch, daß gemäß dem kennzeichnenden Teil des Patentanspruches 1 das Öffnungsteil ringförmig ausgebildet und mit dem Filtergehäuseboden verbunden ist und daß für eine Fluidversorgung der Fluidabfuhr das Öffnungsteil Durchlaßstellen für das im Inneren des Filterelementes befindliche Fluid aufweist, läßt sich für einen Filterelementwechsel das noch im inneren des Elementes verbliebene verschmutzte Restfluid über die Fluidabfuhr und damit über die Durchlaßstellen von Aufnahmekäfig als auch über das Öffnungsteil als Teile der Schließvorrichtung aus dem Filterelement abführen und mit dem Schließen der Schließvorrichtung beim Austausch des verschmutzten Filterelementes ist sichergestellt, daß noch weiter nach innen ablaufendes Fluid aus dem Filterelement in die Umgebung nicht austreten kann. Damit ist eine Entlastung der Umwelt erreicht und zusätzliche Nachreinigungsarbeiten können entfallen. Da aufgrund der Schließvorrichtung das Filterelement beim Elementwechsel nicht mehr mit verschmutztem Fluid befüllt ist, läßt sich dieses auch aufgrund des geringeren Gewichtes leichter handhaben und austauschen, was deutlich die Arbeit des Wartungspersonals erleichtert.

Mit der erfindungsgemäßen Lösung ist sichergestellt, daß die Schließvorrichtung automatisch von sich aus aus ohne weitere Handhabungsvorgänge schließt, sobald das Filterelement von der Elementaufnahme des Filtergehäuses entfernt wird. Vorzugsweise steht dabei die Schließkugel unter der Wirkung einer Druckfeder als Kraftspeicher, die in einem Aufnahmekäfig zusammen mit der Schließkugel aufgenommen ins Innere des Filterelementes hineinragend Bestandteil des Bodenteils des Filterelementes ist.

Bei einer weiteren besonders bevorzugten Ausführungsform der erfindungsgemäßen Filtervorrichtung weist das Filterelement einen Tragkörper auf sowie einen Filtermattenkörper, die voneinander trennbar sind, wobei die Schließvorrichtung Bestandteil des Filtermattenkörpers ist. Auf diese Art und Weise braucht nur der tatsächlich verschmutzte Filtermattenkörper entsorgt oder recycelt zu werden, wohingegen die sonstigen Teile des Filterelementes wiederverwendbar sind. Dies schont Ressourcen und, sofern der Filtermattenkörper aus geeignetem Material besteht, läßt dieser sich voll veraschen, weil nur eine geringe Umweltbelastung auftritt. Da die Schließvorrichtung Bestandteil des zu entsorgenden Filtermattenkörpers ist, wird vorzugsweise dafür Sorge getragen, daß diese gleichfalls aus recycelbarem oder gut entsorgbarem Material besteht.

Bei einer weiteren besonders bevorzugten Ausführungsform der erfindungsgemäßen Filtervorrichtung weist das Filtergehäuse einen Auflagering für das Filterelement auf, das über eine Schnellverbindungseinrichtung lösbar mit dem Filtergehäuse verbindbar ist. Vorzugsweise ist dabei der Auflagering mit einer Abstreifeinrichtung versehen, die beim Entfernen des Filterelementes an seinem Außenumfang entlangstreift. Durch die Schnellverbindungseinrichtung ist ein rasches Trennen des Filterelementes vom Filtergehäuse für einen Entsorgungsvorgang möglich, was wiederum die Arbeit des Wartungspersonals erleichtert. Über die Abstreifeinrichtung ist sichergestellt, daß eventuell am Außenumfang des Filterelementes verbleibende Verschmutzungen auch in Form von verschmutztem Fluid beim Austauschvorgang abgestreift werden und im Filtergehäuse für einen späteren Reinigungsvorgang über das neue eingesetzte Filterelement verbleiben.

Weitere vorteilhaft Ausführungsformen sind Gegenstand der Unteransprüche.

Im folgenden wird die erfindungsgemäße Filtervorrichtung anhand einer Ausführungsform nach der Zeichnung näher erläutert.
Es zeigen in prinzipieller und nicht maßstäblicher Darstellung die
- Fig.1: teilweise in Ansicht, teilweise im Schnitt eine Filtrationsanlage unter Verwendung der erfindungsgemäßen Filtervorrichtung;
- Fig.2 bis 4: teilweise in Ansicht, teilweise im Schnitt dargestellt jeweils den Filtermattenkörper, den Tragkörper und das aus Filtermattenkörper und Tragkörper zusammengesetzte Filterelement;
- Fig.5: eine vergrößert wiedergegebene Detaildarstellung des unteren Endes der Filtervorrichtung;
- Fig.6: das obere Ende der Filtervorrichtung mit zwei unterschiedlich verwendeten Tragkörperanordnungen;
- Fig.7 und 8: eine Draufsicht auf die Schnellverbindungseinrichtung zwischen Filterelement und Filtergehäuse, einmal in gelöster und einmal in verriegelter Stellung.

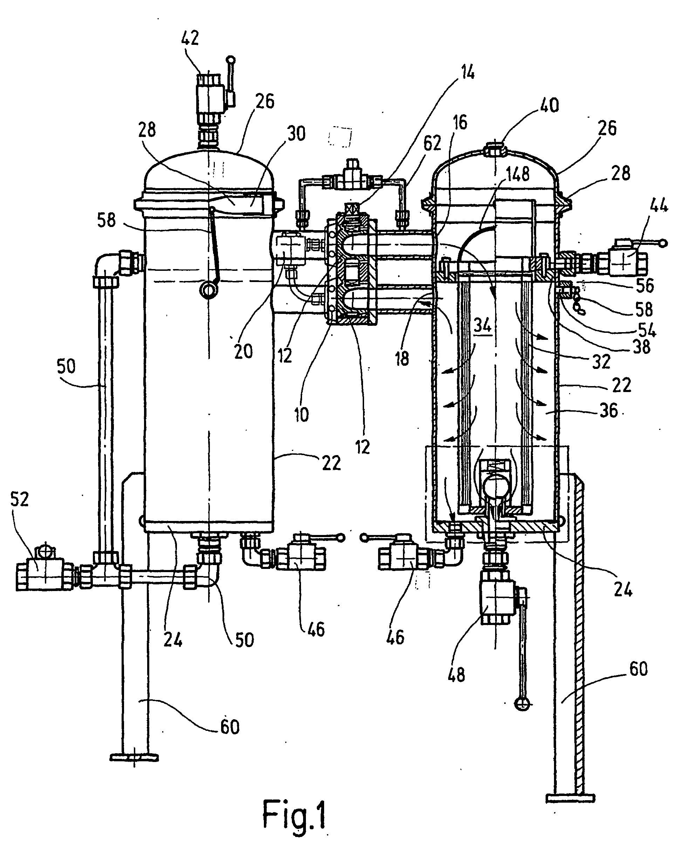

Die Filteranordnung nach der Fig.1 besteht im wesentlichen aus zwei miteinander zusammenwirkenden Filtervorrichtungen, die über eine Umschaltarmatur 10, die zwischen den beiden Filtervorrichtungen angeordnet ist, ansteuerbar sind. Die Umschaltarmatur 10 besteht im wesentlichen aus zwei übereinanderliegenden Kugelhähnen 12, die über eine gemeinsame Steuerwelle 14, beispielsweise von Hand, bewegbar sind. In der in der Fig.1 gezeigten Darstellung nehmen die Kugelhähne 12 der Umschaltarmatur 10 derart eine Schaltlage ein, daß von außen über den Einlaß 16 verschmutztes Fluid in die Filtervorrichtung gelangt und gereinigtes Fluid über den Auslaß 18 zurück zur Umschaltarmatur 10 fließt und dort über den in Blickrichtung auf die Fig.1 gesehen unteren Kugelhahn 12 für die weitere Verwendung, beispielsweise in einer Hydraulik- oder Maschinenanlage, weitergeführt wird.

In der gezeigten Schaltstellung der Umschaltarmatur 10 ist in Blickrichtung auf die Fig.1 gesehen die rechte Filtervorrichtung in Betrieb genommen, wohingegen die gegenüberliegende linke Filtervorrichtung im Stand-by-Betrieb gehalten ist. Ist ein Filtrationsvorgang mit der rechten Filtervorrichtung nicht mehr möglich, beispielsweise im Hinblick auf die zusehends abfiltrierte Verschmutzung, lassen sich durch Betätigen der Umschaltarmatur 10 die Kugelhähne 12 in die andere Schaltstellung verbringen und die andere linke Filtervorrichtung ist dann in Betrieb genommen, wohingegen die bisher für die Filtration eingesetzte rechte Filtervorrichtung abgeschaltet ist. Der dahingehende Wechselbetrieb kann zeitlich gesteuert sein oder aber an die Umschaltarmatur 10 ist in den druckführenden Leitungen eine Verschmutzungsanzeige 20 geschaltet, die die Verschmutzungssituation bei der jeweils in Betrieb genommenen Filtervorrichtung überwacht und dann beispielsweise eine automatische Umschaltung veranlaßt.

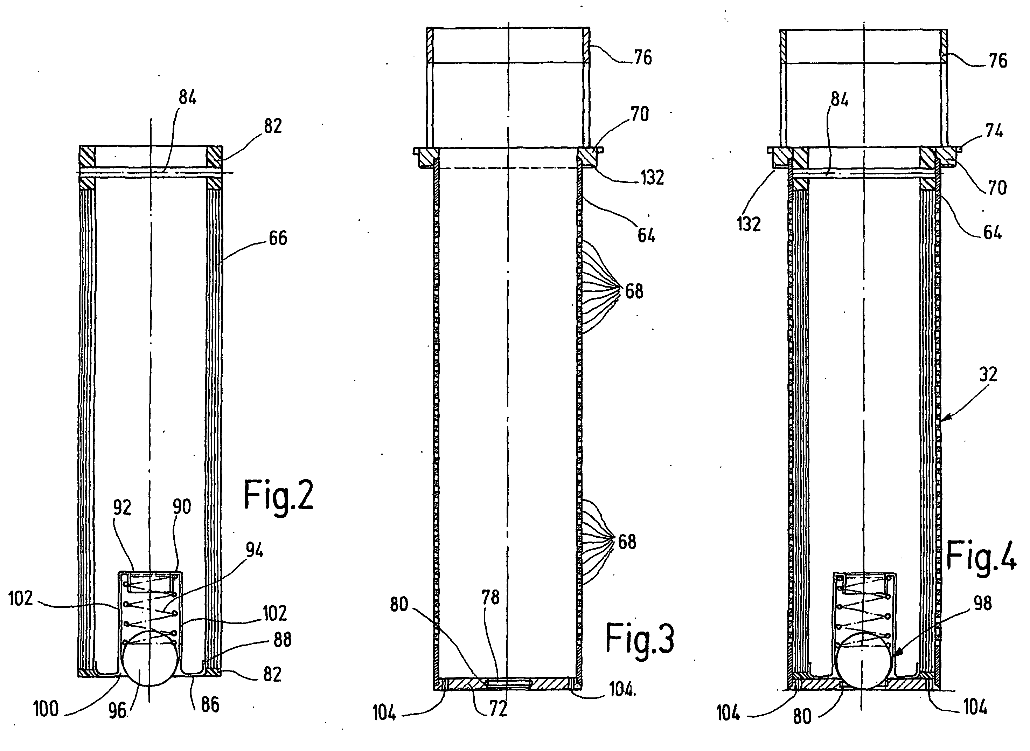

Die jeweilige Filtervorrichtung selbst besteht im wesentlichen aus einem Filtergehäuse 22 mit einem Filtergehäuseboden 24 und einem Filtergehäusedeckel 26. Ansonsten ist das Filtergehäuse 22 im wesentlichen hohlzylindrisch ausgebildet und der Filtergehäuseboden 24 ist vorzugsweise über eine Schweißnaht mit dem Filtergehäuse 22 verbunden. Der Filtergehäusedeckel 26 wiederum ist über einen Schnellspannring 28 mit dem Filtergehäuse 22 lösbar verbunden. Für den Angriff des Schnellspannringes 28 weisen sowohl die einander benachbarten Enden des Filtergehäuses 22 als auch des Filtergehäusedeckels 26 konisch zulaufende Spannflächen auf, die von dem Schnellspannring 28 mit seinem V-förmigen Aufnahmequerschnitt übergreifbar sind. Der dahingehende Schnellspannring 28 läßt sich über den Spannbügel 30 spannen und von Hand festlegen sowie lösen. Innerhalb des Filtergehäuses 22 ist ein Filterelement 32 festgelegt, dessen näherer Aufbau sich aus den Fig.2 bis 4 ergibt. Für einen Filtrationsvorgang wird jedenfalls das Filterelement 32 von innen 34 nach außen 36 durchströmt, wobei die dahingehenden Fluidströmungsrichtungen in Blickrichtung auf die Fig.1 gesehen auf der rechten Seite mit Pfeilen wiedergegeben sind.

Zwischen Einlaß 16 und Auslaß 18 einer jeden Filtervorrichtung ist ein Auflagering 38 eingezogen, der das Filterelement 32 mittig innerhalb der Filtervorrichtung hält und ansonsten den Einlaß 16 vom Auslaß 18 fluiddicht innerhalb des Gehäuses 22 voneinander trennt. Ansonsten weist die Filteranlage nach der Fig.1 eine Vielzahl von Fluidventilen in Form von Kugelhähnen auf, die teilweise dem Entlüften und teilweise dem Entleeren der Vorrichtung dienen. So weist die rechte Filtervorrichtung nach der Fig.1 auf der Oberseite des Filtergehäusedeckels 26 eine Entlüftungsschraube 40 für die Schmutzseite auf. Diese kann, wie dies die linke Filtervorrichtung nach der Fig.1 zeigt, auch durch einen Kugelhahn 42 für die Schmutzseite ersetzt sein. Zwischen Einlaß 16 und Auslaß 18 ist unmittelbar oberhalb des Auflageringes 38 ein Kugelhahn 44 für die Entleerung der Schmutzseite im Gehäusedeckelbereich der Vorrichtung vorhanden. Am Filtergehäuseboden 24 ist bei jeder Filtervorrichtung auf der Reinseite, also zwischen Filterelement 32 und Innenwandung des Filtergehäuses 22, ein Kugelhahn 46 für eine Entleerung der Reinseite vorhanden.

Bei aufgesetztem Filterelement 32 ist darüber hinaus in den Filtergehäuseboden 24 eingebracht und mit der Innenseite 34 des Filterelementes 32 verbunden ein weiterer Kugelhahn 48 vorhanden, der der Entleerung der Schmutzseite dient, sofern das Innere 34 des Filterelementes 32 angesprochen ist. Alternativ hierzu kann auch vorgesehen sein, anstelle des Kugelhahnes 48 und des Kugelhahnes 44 eine gemeinsame Verrohrung 50 vorzusehen, die dann über einen gemeinsamen Kugelhahn 52 entsprechend ansteuerbar ist. Für eine Entlüftung der Reinseite ist unterhalb des Auflageringes 38 im Filtergehäuse 22 eine Entlüftungsstelle 54 vorhanden, die von einer Abschlußkappe 56 dichtend abgedeckt ist. Die jeweilige Abschlußkappe 56 ist über eine Sicherungskette 58 mit dem Spannbügel 30 des Schnellspannringes 28 verbunden, so daß zum einen die Abschlußkappe 56 nicht verloren gehen kann, zum anderen aber auch gewährleistet ist, daß erst nach Entlüften der Reinseite im Filtergehäuse 22 über die Entlüftungsstelle 54 der Schnellspannring 28 über den Spannbügel 30 erst geöffnet werden kann. Dies stellt eine Sicherheitsmaßnahme für das mit dem Elementwechsel beauftragte Wartungspersonal dar.

Für die Doppelfilteranordnung nach der Fig.1 ist die jeweilige Filtervorrichtung mit ihrem Filtergehäuse 22 über Ständer 60 aufgeständert. Ansonsten entsprechen die beiden Filtervorrichtungen sich einander. Um nach einem Filterelementwechsel die erneute Inbetriebnahme der jeweiligen Filtervorrichtung sicherzustellen, ist in die Zuführleitung zum jeweiligen Einlaß 16 vor und hinter der Umschaltarmatur 10 eine Befülleitung 62 angeordnet, über die die entsprechende Befüllung möglich ist.

Das eigentliche Filterelement 32, wie es in der Fig.4 dargestellt ist, weist außenumfangsseitig einen Tragkörper 64 auf. Der Tragkörper 64, wie er im einzelnen in der Fig.3 dargestellt ist, bildet das sog. Stützrohr für einen Filtermattenkörper 66 aus, wie er im einzelnen in der Fig.2 dargestellt ist. Der Tragkörper 64 ist perforiert ausgebildet, d.h. mit Durchlaßstellen 68 versehen, für den Durchtritt des abgereinigten Fluids aus dem Filterelement 32. Zu den Enden hin ist der Tragkörper 64 hülsenartig verlängert und an seinem oberen Ende mit einem Anlagering 70 verschweißt und an seinem anderen unteren Ende derart mit einem Tragkörperbodenteil 72 gleichfalls verbunden.

Bei der Ausführungsform eines Tragkörpers 64 nach den Fig.3 und 4 ist der Anlagering 70 mit einer flanschartigen Verbreiterung 74 versehen. Des weiteren ist auf der Oberseite des Anlageringes 70 ein Entnahmegriff 76 vorhanden, der dahingehend mit dem Anlagering 70 verschweißt ist. Der Entnahmegriff 76 ist vorzugsweise einstückig ausgebildet und begrenzt nach innen einen derart weiten Hohlraum, der geeignet ist, über die freibleibende Griffmitte den Filtermattenkörper 66 zu tauschen. Hierfür kann der Entnahmegriff 76 vorzugsweise in der Art eines Hohlzylinders ausgebildet sein. Des weiteren ist die Griffhöhe derart gewählt, daß jedenfalls das freie Ende des Entnahmegriffes 76 in den Trennbereich zwischen Filtergehäusedeckel 26 und dem sonstigen Filtergehäuse 22 mündet, um derart eine behinderungsfreie Entnahme des Filterelementes 32 aus dem Filtergehäuse 22 bei abgenommenem Deckel 26 zu ermöglichen. Das mit dem Tragkörper 64 fest verschweißte Tragkörperbodenteil 72 weist mittig eine Auslaßstelle 78 auf, die gegenüber dem Tragkörperbodenteil 72 mit einer Ringdichtung 80 versehen ist.

Der Filtermattenkörper 66 selbst besteht vorzugsweise aus einer plissierten Filtermatte, deren Filtergewebelagen Verschmutzungen aus dem die Filtervorrichtung durchlaufenden Fluid abfiltrieren, wobei die Verschmutzungen im Filtermattenkörper 66 verbleiben. Das freie Ende der Filtermatte des Filtermattenkörpers 66 ist von einer Kunststoff-Vergußmasse 82 begrenzt, in der ein halbkreisförmiger Griff 84 integriert ist, der aus seiner in den Fig.2 und 4 gezeigten Lage hochgeklappt werden kann und derart dem Wartungspersonal ermöglicht, den Filtermattenkörper 66 ohne weiteres Lösen von Befestigungsmitteln od.dgl. aus dem Tragkörper 64 zu ziehen und derart zu entnehmen. Der Boden des Filtermattenkörpers 66 ist durch ein Aufnahmeteil 86 gebildet, dessen freie Enden in der Art eines Festlegeringes 88 hochgestellt sind und ins innere des Filtermattenkörpers 66 weisen. Auf der Außenseite des Festlegeringes 88 ist dieser wiederum mittels einer Kunststoff-Vergußmasse 82 mit dem unteren Ende der Filtermatte des Filtermattenkörpers 66 fest verbunden. Das Aufnahmeteil 86 weist des weiteren einen in das Innere des Filtermattenkörpers 66 hineinragenden Aufnahmekäfig 90 auf, der an seinem freien Ende mit einer Einbördelung 92 versehen ist.

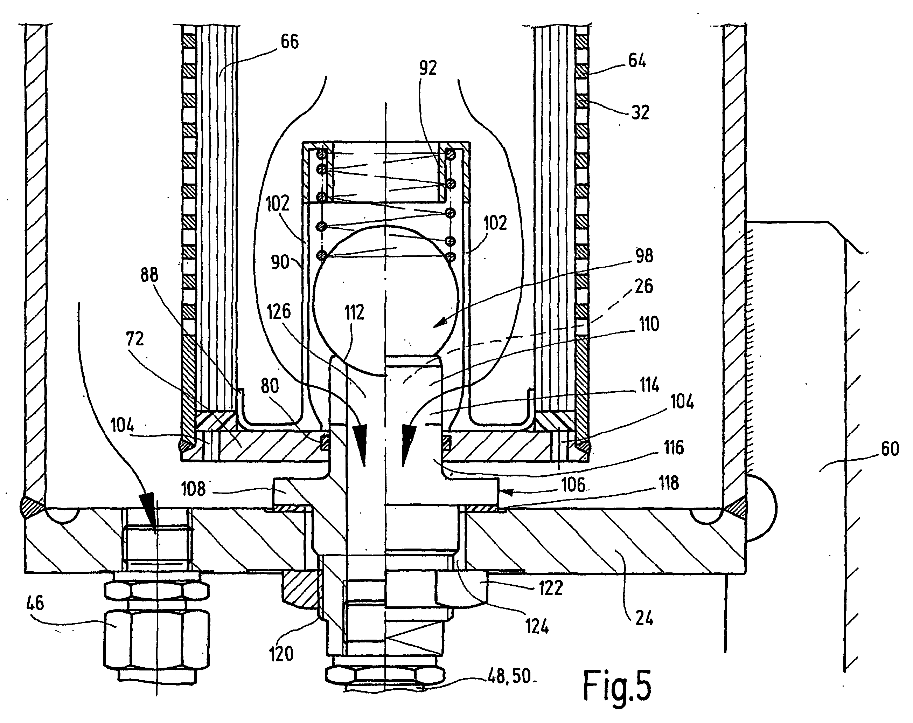

Innerhalb der Einbördelung 92 greift in den derart gebildeten freien Raum des Aufnahmekäfigs 90 eine Schließdruckfeder 94 als Kraftspeicher mit ihrem einen freien Ende ein. An ihrem anderen freien Ende ist die Schließdruckfeder 94 in Anlage mit einer Schießkugel 96 als Schließkörper oder Schließteil der als Ganzes mit 98 bezeichneten Schließvorrichtung (vgl. Fig.4 und 5). Damit die Schließkugel 96 nicht aus dem Aufnahmekäfig 90 austreten kann, weist dieser als Verliersicherung eine Einkröpfung 100 mit Rückhalteflächen auf, an der die Schließkugel 96 im wesentlichen linienförmig zur Anlage kommt, wenn der Filtermattenkörper 66 aus dem Tragkörper 64 entfernt ist und die Schließdruckfeder 94 die Schließkugel 96 in ihrer vordersten Stellung hält gemäß der Darstellung nach der Fig.2.

In Längsrichtung des Aufnahmekäfigs 90 gesehen weist dieser zwischen der Einkröpfung 100 und der Einbördelung 92 Durchlaßstellen 102 auf, die ansonsten in Umfangsrichtung durch die Käfigstäbe des Aufnahmekäfigs 90 begrenzt sind. Die dahingehenden Durchlaßstellen 102 dienen dem Fluiddurchtritt von verschmutztem Fluid aus dem Inneren des Filtermattenkörpers 66 in das Innere des Aufnahmekäfigs 90, in dem längsverfahrbar entgegen der Wirkung der Schließdruckfeder 94 die Schließkugel 96 bewegbar und unverlierbar gehalten ist. Vorzugsweise sind aus Gründen einer besseren Entsorgbarkeit des Filtermattenkörpers 66 der Aufnahmekäfig 90 sowie die Schließkugel 96 aus Kunststoffmaterialien gebildet. Vorzugsweise kann auch die Schließdruckfeder 94 aus Kunststoffmaterial bestehen, im vorliegenden Fall ist jedoch zur Gewährleistung von hohen Schließkräften das Federmaterial aus einem Stahlwerkstoff bestehend.

Wird zum Erstellen eines Filterelementes 32 der Filtermattenkörper 66 in den Tragkörper 64 von oben her eingeschoben, und zwar über die freigehaltene Mitte des Entnahmegriffes 76, gleitet die Außenumfangsseite der Filtermatte an der Innenseite des Tragkörpers 64 entlang und bei voll eingesetztem Filtermattenkörper 66, wie in der Fig.4 dargestellt, bildet der Tragkörper 64 nach außen hin eine Abstützung für die Filtermatte im Fluid- und Filtrierbetrieb. In voll eingesetztem Zustand liegt dann das Aufnahmeteil 86 an der Oberseite des Tragkörperbodenteils 72 an zusammen mit der unteren Vergußmasse 82. Damit kein eventuell eingeschlossenes Luftpolster zwischen Unterseite des Filtermattenkörpers 66 und dem Tragkörperbodenteil 72 einen Einschub- oder Ausschubvorgang behindern kann, weist das Tragkörperbodenteil 72 durchgehende Entlüftungsöffnungen 104 auf.

In dem dahingehenden Einbauzustand ist die Schließkugel 96 etwas von ihrer zugeordneten Einkröpfung 100 abgehoben, jedoch in Form einer Linienberührung über die Schließdruckfeder 94 an der Ringdichtung 80 des Tragkörperbodenteils 72 gehalten, so daß derart über die Schließkugel 96 eine fluiddichte Abdichtung für die Schließvorrichtung 98 erreicht ist.

Die Längenabmessungen von Filtermattenkörper 66 und Tragkörper 64 sind derart zueinander gewählt, daß die Vergußmasse 82 an der Oberseite des Filtermattenkörpers 66 mit dem Griff 84 bündig abschließt sowie mit der Oberseite des Anlageringes 70. Ist das Filterelement 32 aus Filtermattenkörper 66 und Tragkörper 64 gemäß der Darstellung nach der Fig.4 zusammengesetzt, kann das dahingehende Filterelement 32 in das Filtergehäuse 22 bei entferntem Filtergehäusedeckel 26 eingebracht werden.

Als Elementaufnahme 106 ist in den Filtergehäuseboden 24 mittig ein Öffnungsteil 108 eingesetzt. Das Öffnungsteil 108 weist einen Eingriffsstutzen 110 auf, der bei vollständig aufgesetztem Filterelement 32 auf die Elementaufnahme 106 mit seinem freien Ende in den Aufnahmekäfig 90 eingreift und die Schließkugel 96 unter Vorspannung der Schließdruckfeder 94 in Richtung der Einbördelung 92 zurückdrängt. Hierfür weist der Eingriffsstutzen 110 innenumfangsseitig an seinem freien Ende eine konisch umlaufende Eingriffsfläche 112, die eine Einjustierung der Schließkugel 96 im Eingriffsstutzen 110 erlaubt. Der Eingriffsstutzen 110 ist wiederum in der Art eines Käfigs ausgebildet und weist umfangsseitig verteilt Durchlaßstellen 114 auf. Die Durchlaßstellen 114 enden im zylindrischen Eingriffsbereich 116 des Eingriffsstutzens 110, wobei der dahingehende Eingriffsbereich 116 bei vollständig aufgesetztem Filterelement 32 auf der Elementaufnahme 106 die Auslaßstelle 78 im Tragkörperbodenteil 72 vollständig durchgreift und außenumfangsseitig in dichtender Anlage ist mit der Ringdichtung 80.

Im Bereich des Filtergehäusebodens 24 weist das Öffnungsteil 108 eine flanschartige Verbreiterung auf und ist über eine Flachdichtung 118 in dichtender Anlage mit der Oberseite des Filtergehäusebodens 24. Auf der gegenüberliegenden Seite, also am unteren Ende des Filtergehäusebodens 24, weist das Öffnungsteil 108 ein Außengewinde 120 auf, auf das eine Überwurfmutter 122 aufschraubbar ist, um derart das Öffnungsteil 108 in dichtender Weise innerhalb der Durchgriffsbohrung 124 des Filtergehäusebodens 24 festzulegen. Auf der Unterseite des Öffnungsteils 108 für das Filterelement 32 schließt sich dann der Kugelhahn 48 für die Entleerung der Schmutzseite an bzw. die Entrohrung 50 (vgl. Fig.1).

Wie die Fig.5 des weiteren deutlich macht, ist bei voll aufgesetztem Filterelement 32 auf der Elementaufnahme 106 zwischen deren flanschartiger Verbreiterung und der Unterseite des Tragkörperbodenteils 72 noch ein axialer Abstand vorhanden. Wie die Teildarstellung in der Fig.5 des weiteren zeigt, wird das innerhalb des Filterelementes 32 vorhandene verschmutzte Fluid bei aufgedrückter Schließkugel 96 über das Öffnungsteil 108, über die Durchlaßstellen 102 und 114 im Aufnahmekäfig 90 bzw. im Öffnungsteil 108 und über eine kanalartige Fluidabfuhr 26 zum Kugelhahn 48 weitergeleitet oder über die Verrohrung 50 der alternativen Ausführungsform zu dem gemeinsamen Kugelhahn 52. Die dahingehenden Kugelhähne 48,52 sind im Betrieb der Filtervorrichtung geschlossen, ebenso wie die Kugelhähne 46 für die Entleerung der Reinseite der Filtervorrichtung.

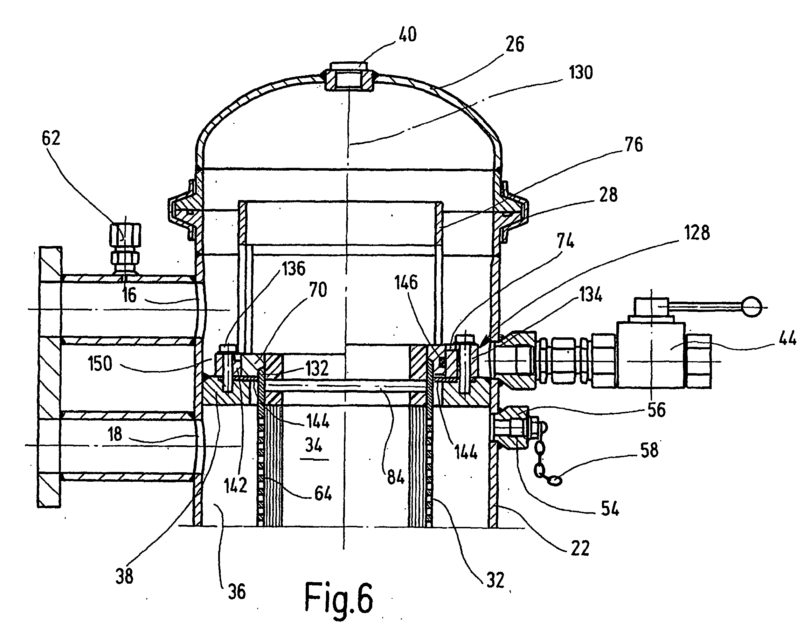

Zum Festlegen des Filterelementes 32 innerhalb des Filtergehäuses 22 dient eine als Ganzes mit 128 bezifferte Schnellverbindungseinrichtung, die in der Art eines Bajonett-Verschlusses ausgebildet ist. Die näheren Verhältnisse hierzu sind in den Fig.6 bis 8 dargestellt. In Blickrichtung auf die Fig.6 gesehen sind links und rechts von der Längsachse 130 der Filtervorrichtung zwei verschiedene Ausführungsformen eines dahingehenden Bajonett-Verschlusses dargestellt. Die in Blickrichtung auf die Fig.6 gesehen linke Ausführungsform betrifft eine Filtervorrichtung 32, wie sie in der Fig.4 dargestellt ist. Hierbei ist der Anlagering 70 des Tragkörpers 64 auf seiner Unterseite mit einer Ringausnehmung versehen, die nach außen hin eine Art Dichtkante 132 begrenzt. Auf der Oberseite des mit dem Inneren des Filtergehäuses 22 verschweißten Auflageringes 38 ist ein Abstandsring 134 über einzelne Schrauben 136 festgelegt. Die Höhe des Abstandsringes 134 ist geringfügig höher gewählt als die zugeordnete Höhe des Anlageringes 70 des Tragkörpers 64. Des weiteren weist der Anlagering 70 auf seiner zu den Schrauben 136 zugewandten Seite konkave Ausnehmungen 138 auf, und zwar so viele, wie Schrauben 136 vorhanden sind. Des weiteren sind die Durchmesserverhältnisse zwischen Ausnehmungen 138 und Schrauben 136 entsprechend gewählt, d.h. die Schraubenköpfe der Schrauben 136 greifen mit einem radialen Spiel in die Ausnehmungen 138 ein, sofern das Filterelement 32 bei abgehobenem Filtergehäusedeckel 26 in die Vorrichtung mit Filtergehäuse 22 von oben her eingesetzt wird.

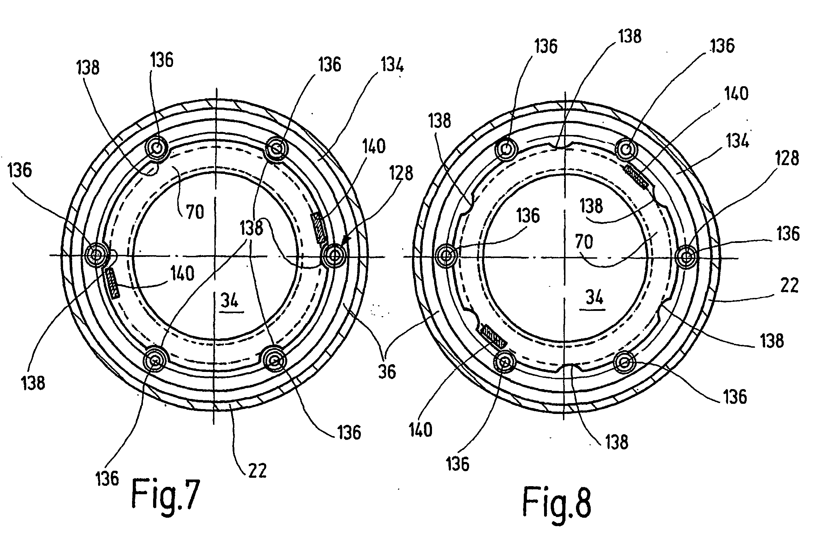

Die dahingehende Eingriffssituation ist in der Fig.7 wiedergegeben, die eine Draufsicht darstellt bei abgehobenem Gehäusedeckel 26 und eingesetztem Filterelement 32 in das übrige Filtergehäuse 22. Die dahingehende Darstellung nach der Fig.7 entspricht auch der Entnahmestellung für das Filterelement 32, sofern dieses unbrauchbar geworden gegen ein neues auszutauschen ist. Des weiteren kann der Anlagering 70, wie dies die Darstellungen nach den Fig.7 und 8 zeigen, auf der Oberseite diametral einander gegenüberliegende Anschläge 140 aufweisen, die paarweise zueinander einen Abstand einhalten, der mindestens dem Durchmesser entspricht zwischen zwei einander diametral gegenüberliegenden Schraubenpaaren 136, und zwar im Bereich einander benachbart zugewandter Kopfbereiche. Derart ist sichergestellt, daß bei eingesetztem Filterelement 32 und Verdrehen des Anlageringes 70 über den Entnahmegriff 76 entgegen dem Uhrzeigersinn aus der Position nach der Darstellung gemäß Fig.7 in eine solche nach der Fig.8 die Schraubenköpfe 136 sicher den Anlagering 70 in einer verriegelten Stellung halten, indem die Schraubenköpfe der Schrauben 136 teilweise den dahingehenden Anlagering übergreifen und die Anschläge 140, die dann in Anlage sind mit den zugeordneten Schraubenpaaren 136, vermeiden ein Überdrehen und erneutes Lösen im Sinne der Darstellung nach der Fig.7. Damit der Anlagering 70 auf dem Abstandsring 134 derart für eine Drehbewegung geführt ist, weist der Abstandsring 134 auf seiner dem Anlagering 70 zugewandten Seite einen Absatz 142 auf, der der Auflage der flanschartigen Verbreiterung 74 des Anlageringes 70 dient.

Zwischen Anlagering 70 und Auflagering 38 befindet sich ein Abstreiferring 144, der gleichfalls über die Schrauben 136 am Auflagering 38 festgelegt ist. Der Abstreiferring 144 weist derart einen Durchmesser auf, daß er elastisch mit einem vorgebbaren Anlagedruck außenumfangsseitig in Anlage ist mit der Außenseite des Tragkörpers 64. Hierdurch wird sichergestellt, daß beim Herausziehen des Filterelementes 32 am Außenumfang des Tragkörpers 64 verbliebene Verschmutzungen über den Abstreiferring 144 abgestreift werden und im Inneren des Gehäuses 22 verbleiben. Bei der in Blickrichtung auf die Fig.6 gesehen links dargestellten Ausführungsform übernimmt der dahingehende Abstreiferring 144 dann auch eine Abdichtfunktion vom Einlaß 16 zum Auslaß 18 der Filtervorrichtung hin, indem die Dichtkante 132 des Anlageringes 70 im festgelegten Zustand von oben her in den Abstreiferring 144 eingreift.

Die dahingehende Abdichtung wird noch durch die Druckverhältnisse innerhalb der Filtervorrichtung begünstigt. Im üblichen Filtrierbetrieb bei eingesetztem Filterelement 32 ist nämlich auf der Seite des Einlasses 16 der Filtervorrichtung ein erhöhter Druck vorhanden, der das Filterelement 32 und mithin die Dichtkante 132 nach unten drückt und derart die Abdichtung gewährleistet. Demgemäß spielt es auch keine Rolle, sofern zwischen Abstandsring 134 und Anlagering 70 ein gewisses Spiel über die einstellbare Länge der Schrauben 136 besteht, was die Verbindung über die Schnellverbindungseinrichtung 128 erleichtert, da der dahingehende Abstand über die Filtrierdrücke innerhalb der Vorrichtung in abdichtender Weise egalisiert wird.

Bei der in Blickrichtung auf die Fig.6 gesehen rechten Ausführungsform weist das Filterelement 32 keine Dichtkante 132 auf, sondern vielmehr ist entgegen der Darstellung nach den Fig.2 und 4 der Anlagering 70 auf seiner Unterseite eben ausgebildet, weist jedoch eine Außennut 146 mit O-Dichtring auf. Über den dahingehenden O-Ring in der Außennut 146 erfolgt dann die fluiddichte Abdichtung gegenüber dem Innenumfang des Abstandsringes 134, der wiederum mit einem Absatz 142 versehen ist für die Anlage mit der flanschartigen Verbreiterung 74 des Anlageringes 70. Da die Abdichtung mithin nicht mehr über den Abstreiferring 144 erfolgt, kann dann zwischen Oberseite des Abstreiferringes 144 und Unterseite des Anlageringes 70 ein axialer Abstand in Richtung der Längsachse 130 der Filtervorrichtung vorgesehen sein. Anstelle des stegartigen Entnahmegriffes 76 für das Filterelement 32 kann auch ein Entnahmebügel 148 treten, wie er in der Fig.1 für die rechte Filtervorrichtung als alternative Ausführungsform in der linken Bildhälfte, also links von der Längsachse 130 der rechten Filtervorrichtung, gezeigt ist. Der dahingehende Entnahmebügel 148 könnte auch umlegbar sein ähnlich wie der bügelartige Griff 84 für den Filtermattenkörper 66. Vorzugsweise ist jedoch der Griff 84 des Filtermattenkörpers 66 als Haltestab ausgebildet, der mittig den Filtermattenkörper 66 durchgreift und endseitig in der Kunststoff-Vergußmasse 82 aufgenommen ist.

Des weiteren kann vorgesehen sein bei einer geänderten Ausführungsform, den Tragkörper 64 unmittelbar in der Filtervorrichtung zu belassen und nur den Filtermattenkörper 66 als Filterelement auszutauschen. In einem dahingehenden Fall ist vorzugsweise zwischen der Schließkugel 96 als Schließteil und der Einkröpfung 100 des Aufnahmekäfigs 90 unmittelbar eine Abdichtung vorzusehen, beispielsweise indem die Einkröpfung 100 mit einem Dichtmittel versehen ist. Wie des weiteren die Darstellung nach der Fig.6 zeigt, ist zwischen der Innenseite des Gehäuses 22 im Bereich zwischen Einlaß 16 und Auslaß 18 sowie der Außenseite des Abstandsringes 134 ein Schmutzkanal 150 gebildet, in dem sich Restfluidmengen, die verschmutzt sind, bei einer Außerbetriebnahme der Filtervorrichtung sammeln können und die dann über den Kugelhahn 44 als Entleerungsstelle für die Schmutzseite aus der Vorrichtung entfernen lassen, indem die dahingehende Entnahme des Kugelhahnes 44 direkt in den Schmutzkanal 150 oberhalb des Auflageringes 38 in das Innere der Filtervorrichtung mündet.

Zum besseren Verständnis der erfindungsgemäßen Filtervorrichtung wird nunmehr ein Filterelementwechsel anhand der Vorrichtung und der Figuren näher beschrieben. Gemäß der Darstellung nach der Fig.1 ist in Blickrichtung gesehen die linke Filtervorrichtung außer Betrieb genommen und mit der rechten Filtervorrichtung wird ein Filtrierbetrieb durchgeführt. Ist nach einer gewissen Filtriereinsatzdauer das Filterelement 32, insbesondere der Filtermattenkörper 66, verschmutzt, ist das dahingehende Element zu tauschen. Gegebenenfalls ist über eine Messung des Differenzdruckes mittels der Verschmutzungsanzeige 20 der dahingehende Verschmutzungsgrad, der den Elementwechsel notwendig macht, feststellbar. Um die rechte Filtervorrichtung des in der Fig.1 gezeigten Doppelfilters außer Betrieb zu nehmen, ist mithin eine Umschaltung der Kugelhähne 12 der Umschaltarmatur 10 notwendig. Nach Umschalten ist dann die linke Filtervorrichtung in Betrieb und die rechte Filtervorrichtung außer Betrieb genommen, jedoch mit verschmutztem Fluid entsprechend befüllt. Demgemäß ist zunächst für einen Elementwechsel des Filterelementes 32 die sog. Schmutzseite der Filtervorrichtung zu entleeren.

Dies geschieht durch Öffnen der Kugelhähne 44 und 48, die eine Entleerungsmöglichkeit für die Schmutzseite darstellen. Dabei wird über den Kugelhahn 44 das verschmutzte Fluid zur Deckelseite hin des Filtergehäuses 22 entleert und über den zuunterst angeordneten Kugelhahn 48 (bzw. für die andere Filtervorrichtung über den Kugelhahn 52) das Innere 34 des Filterelementes 32 entleert, das gleichfalls mit verschmutztem Fluid befüllt ist. Die letztgenannte Entleerung erfolgt dabei über die Schließvorrichtung 98, die für den dahingehenden Enleerungsvorgang gemäß der Darstellung nach der Fig.1 sowie der Fig.5 über das Öffnungsteil 108 in ihrer geöffneten fluidführenden Stellung ist. Anschließend erfolgt eine Entlüftung auf der Deckelseite des Filtergehäuses 22 über die Entlüftungsschraube 40 im oberen Bereich des Filtergehäusedeckels 26. Alternativ kann, wie dies in der Fig.1 dargestellt ist, die dahingehende Entlüftung auf der Schmutzseite auch über den dort gezeigten Kugelhahn 42 erfolgen, so daß die Entlüftungsschraube 40 auch bei einer dahingehenden Lösung entfallen kann. Entsprechend erfolgt dann die Entleerung der Reinseite über das Öffnen des Kugelhahnes 46, der auf die Reinseite 36 der Filtervorrichtung mündet. Des weiteren ist die dahingehende Reinseite dann an der Entlüftungsstelle 54 durch Entfernen der Abschlußkappe 56 entsprechend zu entlüften.

Für einen Elementausbau des verschmutzten Filterelementes 32 ist es dann notwendig, den Schnellspannring 28 zu öffnen, was mittels des Spannbügels 30 nur dann möglich ist, wenn die Entlüftung auf der Reinseite über die Entlüftungsstelle 54 erfolgt ist, da ansonsten die Sicherungskette 58 beim Verbleib an der Entlüftungsstelle 54 einen dahingehenden Öffnungsvorgang über den Spannbügel 30 unmöglich machen würde: Dies dient der Sicherheit des Wartungspersonals. Ein Abheben des Filtergehäusedeckels 26 unter Druck und unbeabsichtigt ist also derart vermieden. Sobald der Filtergehäusedeckel 26 entfernt ist, wird dann das Filterelement 32 über den Entnahmegriff 76 aus seiner in der Fig.8 dargestellten Festlegestellung im Uhrzeigersinn verschwenkt, bis die Entnahmeposition gemäß Fig.7 sich einstellt. Bei der dahingehenden Entnahmeposition sind die Ausnehmungen 138 deckungsgleich mit den Schrauben 136 und derart ist eine Aushubbewegung des Filterelementes 32 möglich. Mit Herausziehen des Filterelementes 32 entfernt sich das Öffnungsteil 108 aus dem Aufnahmekäfig 90 und die Schließdruckfeder 94 bringt die Schließkugel 96 in dichtende Anlage mit der Ringdichtung 80 des Tragkörperbodenteils 72. Demgemäß ist dann das Innere 34 des Filterelementes 32 gegenüber der Umgebung über die Schließvorrichtung 98 fluiddicht, zumindest aber tropfarm verschlossen.

Nachdem bereits die wesentliche Restfluidmenge im Inneren 34 des Filterelementes 32 über die Schließvorrichtung 98 und den zugeordneten Entleerungskugelhahn 48 bzw. 52 abgeführt wurde, handelt es sich bei den verbleibenden Verschmutzungen im wesentlichen um Verschmutzungstropfen, die aus dem Filtermattenkörper 66 austreten. Diese werden nunmehr über die Schließvorrichtung 98 im Inneren 34 des Filterelementes 32 zurückgehalten und können die Umgebung nicht verschmutzen. Anschließend wird, wie dies gemäß den Fig.2 bis 4 näher erläutert wurde, der Filtermattenkörper 66 vom Tragkörper 64 getrennt und entsprechend entsorgt sowie gegen einen neuen Filtermattenkörper 66 ausgetauscht. Des weiteren besteht die Möglichkeit, den Tragkörper 64 entsprechend abzureinigen. Beim Herausziehen des verschmutzten Tragkörpers 64 auf seiner Außenseite verbleibende Verschmutzungen lassen sich über den Abstreiferring 144 entfernen, so daß die dahingehenden Verschmutzungen nicht ungewollt aus der Filtervorrichtung austreten können.

Abschließend wird das derart erneuerte Filterelement 32 in umgekehrter Folge wieder eingesetzt und über den Bajonett-Verschluß in der Filtervorrichtung festgelegt. Die Schließvorrichtung 98 nimmt dabei wieder ihre geöffnete Stellung ein, wie dies in der Fig.5 dargestellt ist. Nach erneuter Montage des Filtergehäusedeckels 26, der wiederum über den Schnellspannring 28 mit Spannbügel 30 festgelegt wird, beginnt die Inbetriebnahme der Filtervorrichtung durch Entlüften und Befüllen. Dabei werden zunächst die Kugelhähne 46,44 und 48 sowohl auf der Rein- als auch auf der Schmutzseite entsprechend geschlossen. Anschließend wird die Befülleitung 62 zum Befüllen des Filtergehäuses 22 geöffnet. Es erfolgt das Schließen der Entlüftungsstelle 54 und anschießend wird die Entlüftungsschraube 40 eingedreht oder alternativ der Kugelhahn 42 geschlossen. Demgemäß hat sowohl ein Schließvorgang für die Entlüftung auf der Reinseite als auch auf der Schmutzseite stattgefunden. Nach Schließen der Befülleitung 62 läßt sich dann wiederum durch Betätigen der Umschaltarmatur 10 und Umlegen der Kugelhähne 12 in die Schaltdarstellung nach der Fig.1 die in Blickrichtung auf die Figur gesehen rechte Filtervorrichtung in Betrieb und die linke außer Betrieb nehmen. Letztere würde dann für einen Abreinigungsvorgang, wie dargestellt, zur Verfügung stehen. Um das Wartungspersonal bei den Wartungsarbeiten noch weiter zu entlasten, kann es vorgesehen sein, den Filtergehäusedeckel 26 als Klöpperboden auszubilden, um derart eine gewichtsreduzierte Gesamtkonstruktion für die Filtervorrichtung zu erreichen.

## Patentansprüche

1. Filtervorrichtung mit mindestens einem Filterelement (32), das in einem Filtergehäuse (22) aufnehmbar ist, mit einem Einlaß (16) für ein abzureinigendes Fluid und einem Auslaß (18) für das durch das Filterelement (32) abgereinigte Fluid, wobei das Filterelement (32) von mindestens einer Elementaufnahme (106) des Filtergehäuses (22) gehalten ist, wobei mit dem Entfernen des Filterelementes (32) von der Elementaufnahme (106) eine Schließvorrichtung (98) das Innere (34) des Filterelementes (32) gegenüber der Umgebung verschließt, wobei die Schließvorrichtung (98) ein Schließteil in Form einer Schließkugel (96) aufweist, das unter der Wirkung eines Kraftspeichers in Richtung seiner Schließstellung gegen die Elementaufnahme (106) im eingebauten Zustand des Filterelementes (32) gedrückt ist, wobei das Schließteil in einem Aufnahmekäfig (90) des Filterelementes (32) geführt ist, wobei als weiterer Teil der Schließvorrichtung (98) das Filtergehäuse (22) ein Öffnungsteil (108) aufweist, das bei auf der Elementaufnahme (106) aufgesetztem Filterelement (32) das Schließteil entgegen der Wirkung des Kraftspeichers in Richtung seiner Öffnungsstellung hält, wobei das Öffnungsteil (108) eine Fluidabfuhr (126) aufweist, und wobei für eine Fluidversorgung der Fluidabfuhr (126) der Aufnahmekäfig (90) Durchlaßstellen (102) für das im Inneren (34) des Filterelementes (32) befindliche Fluid aufweist, **dadurch gekennzeichnet, daß** das Öffnungsteil (108) ringförmig ausgebildet und mit dem Filtergehäuseboden (24) verbunden ist und daß für eine Fluidversorgung der Fluidabfuhr (126) das Öffnungsteil (108) Durchlaßstellen (114) für das im Inneren (34) des Filterelementes (32) befindliche Fluid aufweist.

2. Filtervorrichtung nach Anspruch 1, **dadurch gekennzeichnet, daß** die Schließkugel (96) unter der Wirkung einer Druckfeder (94) als Kraftspeicher steht, die in einem Aufnahmekäfig (90) zusammen mit der Schließkugel (96) aufgenommen ins Innere (34) des Filterelementes (32) hineinragend Bestandteil des Bodens (24) des Filterelementes (32) ist.

3. Filtervorrichtung nach Anspruch 1 oder 2, **dadurch gekennzeichnet, daß** die Fluidabfuhr (126) in ein Absperrventil (48, 52) mündet.

4. Filtervorrichtung nach einem der Ansprüche 1 bis 3, **dadurch gekennzeichnet, daß** der Aufnahmekäfig (90) Rückhalteflächen (100) für das Schließteil aufweist und daß in der Schließstellung der Schließvorrichtung (98) das Schließteil die jeweilige Durchlaßstelle (102) des Aufnahmekäfigs (90) von der jeweiligen Durchlaßstelle (114) des Öffnungsteils (108) trennt.

5. Filtervorrichtung nach Anspruch 4, **dadurch gekennzeichnet, daß** das Filterelement (32) einen Tragkörper (64) aufweist sowie einen Filtermattenkörper (66), die voneinander trennbar sind und daß die Schließvorrichtung (98) zumindest teilweise Bestandteil des Filtermattenkörpers (66) ist.

6. Filtervorrichtung nach einem der Ansprüche 1 bis 5, **dadurch gekennzeichnet, daß** das Filtergehäuse (22) einen Auflagering (38) für das Filterelement (32) aufweist, das über eine Schnellverbindungseinrichtung (128) lösbar mit dem Filtergehäuse (22) verbindbar ist.

## Claims

1. Filter device with at least one filter element (32), which can be housed in a filter housing (22), with an inlet (16) for a fluid to be purified and an outlet (18) for the fluid cleaned by the filter element (32), in which the filter element (32), is held by at least one element retainer (106) of the filter housing (22), whereby with the removal of the filter element (32) from the element retainer (106) a closing device (98) closes off the inside (34) of the filter element (32) from the environment, whereby the closing device (98) displays a closing part in the form of a ball valve (96) which, when the filter element (32) is in the installed position, is pressed under the effect of an energy storing device in the direction of its closed position against the element retainer (106), whereby the closing part is guided into a retainer (90) of the filter element (32), while as an additional part of the closing device (98) the filter housing (22) displays an opening part (108), which holds the closing part, counter to the effect of the energy storing device in the direction of its open position when the filter element (32) is seated on the element retainer (106), while the opening part (108) displays a fluid outlet (126), and whereby, in order to dispose of the fluid, the fluid outlet (126) displays exit points (102) for the fluid which is in the interior (34) of the filter element (32), **characterised in that** the opening part (108) is ring-shaped and connected with the base of the filter housing (24) and that in order to dispose of the fluid from the fluid outlet (126) the opening part (108) displays perforations (114) for the fluid which is in the interior (34) of the filter element (32).

2. Filter element according to claim 1, **characterised in that** the ball valve (96) is subject to the effect of a pressure spring (94) used as an energy storing device, said filter element housed in a retainer (90) together with the ball valve (96) being an integral part of the base (24) of the filter element (32) projecting into the interior (34) of the filter element (32).

3. Filter device according to claim 1 or 2, **characterised in that** the fluid outlet (126) runs into a stop valve (48, 52).

4. Filter device according to one of claims 1 to 3, **characterised in that** the retainer (90) displays retaining areas (100) for the closing part and that in the closed position of the closing device (98) the closing part separates the respective exit point (102) of the retainer (90) from the respective exit point (102) of the opening part (108).

5. Filter device according to claim 4, **characterised in that** the filter element (32), displays a supporting member (64) and also a filter mat body (66), which are separable from each other and that the closing device (98) is at least partly an integral part of the filter mat body (66).

6. Filter device according to one of claims 1 to 5, **characterised in that** the filter housing (22) displays a supporting ring (38) for the filter element (32), which is detachably connected via a quick release coupling device (128) with the filter housing (22).

## Revendications

1. Dispositif de filtre avec au moins un élément formant filtre (32), qui peut être logé dans un boîtier de filtre (22), avec un orifice d'admission (16) pour un fluide à nettoyer et un orifice de sortie (18) pour le fluide nettoyé par l'élément formant filtre (32), moyennant quoi l'élément formant filtre (32) est maintenu par au moins un logement d'élément (106) du boîtier de filtre (22), moyennant quoi avec l'éloignement de l'élément formant filtre (32) du logement d'élément (106) un dispositif de fermeture (98) ferme l'intérieur (34) de l'élément formant filtre (32) par rapport au milieu, moyennant quoi le dispositif de fermeture (98) présente une pièce de fermeture de la forme d'une boule de fermeture (96), qui est poussée sous l'action d'un accumulateur de combustible en direction de sa position de fermeture contre le logement de l'élément (106) dans l'état intégré de l'élément formant filtre (32), moyennant quoi la pièce de fermeture est conduite dans un logement de réception (90) de l'élément formant filtre (32), moyennant quoi le boîtier de filtre (22) présente, comme autre pièce du dispositif de fermeture (98), une pièce d'ouverture (108), qui maintient la pièce de fermeture près de l'élément formant filtre (32) posé sur le logement de filtre (106) contre l'action de l'accumulateur de combustible en direction de sa position d'ouverture, moyennant quoi la pièce d'ouverture (108) présente une évacuation de fluide (126), et moyennant quoi pour une alimentation en fluide de l'évacuation de fluide (126), le logement de réception (90) présente des lieux de passage (102) pour le fluide se trouvant à l'intérieur (34) de l'élément formant filtre (32), **caractérisé en ce que** la pièce d'ouverture (108) est conçue en forme d'anneau et est connectée au fond (24) du boîtier de filtre et **en ce que** pour une alimentation en fluide de l'évacuation de fluide (126), la pièce d'ouverture (108) présente des lieux de passage (114) pour le fluide se trouvant à l'intérieur (34) de l'élément formant filtre (32).

2. Dispositif de filtre selon la revendication 1, **caractérisé en ce que** la boule de fermeture (96) est sous l'action d'un ressort de pression (94) en tant qu'accumulateur de combustible, lequel ressort de pression est une partie constitutive du fond (24) de l'élément formant filtre (32), laquelle partie constitutive entre dans un logement de réception (90) avec la boule de fermeture (96) logée à l'intérieur (34) de l'élément formant filtre (32).

3. Dispositif de filtre selon la revendication 1 ou 2, **caractérisé en ce que** l'évacuation du fluide (126) débouche sur une soupape de retenue (48, 52).

4. Dispositif de filtre selon l'une quelconque des revendications 1 à 3, **caractérisé en ce que** le logement de réception (90) présente des surfaces de retenue (100) pour la pièce de fermeture et **en ce que** dans la position de fermeture du dispositif de fermeture (98), la pièce de fermeture sépare les lieux de passages respectifs (102) du logement de réception (90) des lieux de passages respectifs (114) de la pièce d'ouverture (108).

5. Dispositif de filtre selon la revendication 4, **caractérisé en ce que** l'élément formant filtre (32) présente un corps formant support (64) ainsi qu'un corps formant filtre à mailles (66), qui sont séparables l'un de l'autre et **en ce que** le dispositif de fermeture (98) est au moins partiellement une partie constitutive du corps formant filtre à mailles (66).

6. Dispositif de filtre selon l'une quelconque des revendications 1 à 5, **caractérisé en ce que** le boîtier de filtre (22) présente un anneau support (38) pour l'élément formant filtre (32), lequel peut être connecté de manière amovible au boîtier de filtre (22) par l'intermédiaire d'un dispositif de raccordement rapide (128).
